# EUROPÄISCHE PATENTSCHRIFT

(11) **EP 1 162 240 B1**
(45) Veröffentlichungstag und Bekanntmachung des Hinweises auf die Patenterteilung: **21.12.2005**
(21) Anmeldenummer: 01112682.8
(22) Anmeldetag: 25.05.2001
(51) Int. Cl.: C09B 57/00, B01J 19/00, C09B 67/22

(54) **Verfahren zur Herstellung von Diketopyrrolopyrrol-Pigmenten**
Process to manufacture diketopyrrolopyrrole pigments
Procédé de fabrication de pigments de dicétopyrrolopyrrole

(30) Priorität: 07.06.2000 DE 10028104
(43) Veröffentlichungstag der Anmeldung: 12.12.2001
(73) Patentinhaber: Clariant Finance (BVI) Limited, Road Town, Tortola (VG)
(72) Erfinder: Nickel, Uwe, Dr., 61352 Bad Homburg (DE); Unverdorben, Leonhard, Dr., 61130 Nidderau (DE); Weber, Joachim, Dr., 65929 Frankfurt am Main (DE); Dietz, Erwin, Dr., 61462 Königstein (DE); Patzlaff, Jürgen, Dr., 64380 Rossdorf (DE)
(74) Vertreter: Hütter, Klaus

(56) Entgegenhaltungen:
- EP-A- 0 962 499
- DE-A- 3 926 466
- US-A- 4 579 949
- H. LÖWE ET AL: "State-of-the-art in microreaction technology : concepts, manufacturing and applications" ELECTROCHIMICA ACTA, Bd. 44, 1999, Seiten 3679-3689, XP002254956 ELSEVIER SCIENCE PUBLISHERS, BARKING.; GB
- PENTH B: "NEW NON - CLOGGING MICROREACTOR FOR CHEMICAL PROCESSING AND NANO MATERIALS" PROCEEDINGS. MICRO. TEC. VDE WORLD MICROTECHNOLOGIES CONGRESS, PROCEEDINGS OF INTERNATIONAL CONFERENCE ON MICROTECHNOLOGIES, XX, XX, Bd. 1, 25. - 27. September 2000, Seiten 401-405, XP001058349

## Beschreibung

Die vorliegende Erfindung beschreibt ein Verfahren zur Herstellung von 1,4-Diketopyrrolo[3,4-c]pyrrol-Pigmenten in Mikroreaktoren.

1,4-Diketopyrrolo[3,4-c]pyrrol-Pigmente sind bekannt und können zum Pigmentieren von hochmolekularen organischen Materialien eingesetzt werden. Besonders zum Pigmentieren von Lacken haben sie große industrielle Bedeutung erlangt. In der Praxis werden daher hohe Anforderungen an ihre Echtheiten und coloristischen Eigenschaften gestellt. Deshalb kommt dem Herstellungsprozess große Bedeutung zu.

Verfahren zu Herstellung werden z.B. in US-A-4,415,685 und US-A-4,579,949 offenbart. In US-A-4,579,949 wird ein konventionelles Batch-Verfahren zur Herstellung von 1,4-Diketopyrrolo[3,4-c]pyrrol-Pigmenten durch Reaktion von Dialkylbernsteinsäureestem mit aromatischen Nitrilen in Gegenwart starker Basen in alkoholischer Lösung bzw. Suspension und anschließender Hydrolyse des entstandenen Salzes beschrieben.

Die EP-A-0 640 603 offenbart ein Batch-Verfahren zur Herstellung von hochtransparenten 1,4-Diketopyrrolo[3,4-c]pyrrol-Pigmenten.

Die EP-A-0 672 729 beschreibt ein Batch-Verfahren zur Herstellung von deckenden 1,4-Diketopyrrolo[3,4-c]pyrrol-Pigmenten.

EP-A-0 962 499 offenbart ein Batch-Verfahren zur Herstellung von 1,4-Diketopyrrolo-[3,4-c]pyrrol-Pigmenten unter Zusatz von Kristallwachstumsinhibitoren während der Synthese.

Ein gemeinsames Merkmal dieser Verfahren ist die Notwendigkeit der Kontrolle der Verfahrensparameter: beispielsweise sind Temperatur bei und Dauer der Zugabe der einzelnen Reaktionspartner, Nachrührzeiten und -temperaturen, Temperatur bei der Hydrolyse, Suspensionskonzentration bei Reaktion und Hydrolyse, Einsatz von weiteren Lösemitteln (wie Wasser und/oder Alkoholen) und von Säure bei der Hydrolyse entscheidend für die Echtheiten, die coloristischen Eigenschaften der erhaltenen Pigmente sowie deren Qualitätskonstanz. Eine besondere Anforderung ist die Notwendigkeit des Ausschlusses von Wasserspuren bis zur Hydrolyse. Auch ist der scale-up von neuen Produkten vom Labormaßstab in den großtechnischen Maßstab bei Batch-Verfahren aufwendig und kann Schwierigkeiten bereiten, da beispielsweise Kessel- und Rührergeometrien oder Wärmeübergänge großen Einfluss auf Korngröße, Korngrößenverteilung und coloristische Eigenschaften haben.

Der vorliegenden Erfindung lag die Aufgabe zugrunde, ein umweltfreundliches, kostengünstiges, technisch zuverlässiges Verfahren zur Herstellung von Diketopyrrolopyrrol-Pigmenten zu finden, bei dem eine optimale Durchmischung der Reaktanden gegeben ist, die gewünschten Verfahrensparameter möglichst konstant eingehalten werden können und der scale-up einfach zu bewerkstelligen ist.

Es ist bekannt, bestimmte chemische Umsetzungen in Mikroreaktoren durchzuführen. Mikroreaktoren sind aus Stapeln von strukturierten Platten aufgebaut und in der DE 39 26 466 C2 und US-A-5,534,328 beschrieben. In der US-A-5,811,062 wird darauf hingewiesen, dass Mikrokanal-Reaktoren vorzugsweise für Reaktionen benutzt werden, die keine Materialien oder Feststoffe benötigen oder produzieren, die die Mikrokanäle verstopfen können.

Es wurde nun gefunden, dass sich Mikroreaktoren überraschenderweise zur Herstellung von Diketopyrrolopyrrol-Pigmenten eignen.

Die verwendete Bezeichnung Mikroreaktor steht dabei stellvertretend für Mikro- und Minireaktoren, die sich nur aufgrund der Dimensionen und Aufbau der Reaktionskanalstrukturen unterscheiden.

Beispielsweise können Mikroreaktoren, wie sie aus den angeführten Schriften oder aus Veröffentlichungen des Instituts für Mikrotechnik Mainz GmbH, Deutschland, bekannt sind, oder auch kommerziell erhältliche Mikroreaktoren, wie beispielsweise der auf Cytos™ basierende Selecto™ der Firma Cellular Process Chemistry GmbH, Frankfurt/Main, eingesetzt werden.

Gegenstand der Erfindung ist daher ein Verfahren zur Herstellung von 1,4-Diketopyrrolo[3,4-c]pyrrol-Pigmenten der Formel (I), 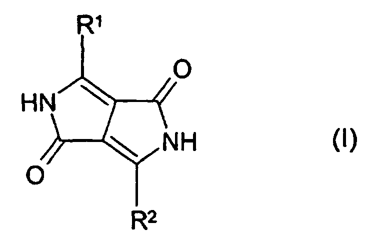 im folgenden Diketopyrrolopyrrol-Pigmente genannt, in der R¹ und R² gleich oder verschieden sind und einen unsubstituierten oder substituierten isocyclischen oder heterocyclischen aromatischen Rest darstellen, durch Umsetzung eines Bernsteinsäurediesters mit einem Nitril der Formel (II)

R₁-CN (II)

oder der Formel (III)

R₂-CN (III)

oder mit einer Mischung dieser Nitrile, vorzugsweise mit nur einem Nitril der Formel (II) oder der Formel (III), in einem organischen Lösemittel und in Gegenwart einer starken Base, und anschließender Hydrolyse des entstandenen Salzes des Diketopyrrolopyrrol-Pigmentes, dadurch gekennzeichnet, dass man die Umsetzung, oder die Hydrolyse, oder die Umsetzung und die Hydrolyse, in einem Mikroreaktor durchführt.

Zweckmäßigerweise werden bei dem erfindungsgemäßen Verfahren die eingesetzten Stoffe flüssig, geschmolzen, als Lösungen oder als Suspensionen kontinuierlich dem Mikroreaktor zugeführt. Dabei kann die in den herkömmlichen Verfahren verwendete Reihenfolge der Zugabe realisiert werden; auch können die im herkömmlichen Verfahren verwendeten Pigmentdispergatoren oder Hilfsmittel ebenfalls im erfindungsgemäßen Verfahren eingesetzt werden.

Bevorzugte isocyclische aromatische Reste R¹ und R² sind mono- bis tetracyclische, insbesondere mono- oder bicyclische Reste, wie z.B. Phenyl, Biphenyl und Naphthyl.

Bevorzugte heterocyclische aromatische Reste R¹ und R² sind monocyclisch bis tricyclisch und können noch ein oder mehrere annellierte Benzolringe enthalten. Die Cyanogruppe kann sowohl am heterocyclischen als auch am isocyclischen Ring stehen.

Beispiele für heterocyclische Reste sind Pyridyl, Pyrimidyl, Pyrazinyl, Triazinyl, Furyl, Pyrrolyl, Thiophenyl, Chinolyl, Cumarinyl, Benzfuranyl, Benzimidazolyl, Benzoxazolyl, Dibenzofuranyl, Benzothiophenyl, Dibenzothiophenyl, Indolyl, Carbazolyl, Pyrazolyl, Imidazolyl, Oxazolyl, Isoxazolyl, Thiazolyl, Indazolyl, Benzthiazolyl, Pyridazinyl, Cinnolyl, Chinazolyl, Chinoxalyl, Phthalazinyl, Phthalazindionyl, Phthalamidyl, Chromonyl, Naphtholactamyl, Chinolonyl, ortho-Sulfobenzimidyl, Maleinimidyl, Naphtharidinyl, Benzimidazolonyl, Benzoxazolonyl, Benzthiazolonyl, Benzthiazothionyl, Chinazolonyl, Chinoxalonyl, Phthalazonyl, Dioxopyrimidinyl, Pyridonyl, Isochinolonyl, Isochinolinyl, Isothiazolyl, Benzisoxazolyl, Benzisothiazolyl, Indazolonyl, Acridonyl, Chinazolindionyl, Chinoxalindionyl, Benzoxazindionyl, Benzoxazinonyl und Naphthalimidyl.
Die isocyclischen und die heterocyclischen aromatischen Reste können übliche Substituenten enthalten, beispielsweise:
(1) Halogenatome, z.B. Chlor-, Brom- oder Fluoratome.
(2) Verzweigte oder unverzweigte Alkylgruppen mit 1 bis 18, vorzugsweise 1 bis 12, insbesondere 1 bis 8, besonders bevorzugt 1 bis 4, Kohlenstoffatomen. Diese Alkylgruppen können ihrerseits durch einen oder mehrere, z.B. 1, 2, 3, 4, oder 5, Substituenten aus der Gruppe F, OH, CN, -OCOR¹⁶, OR¹⁷, COOR¹⁶, CONR¹⁷R¹⁸, oder R¹⁶-O-CONHR¹⁶ substituiert sein, worin R¹⁶ Alkyl, Aryl, z.B. Naphthyl, Benzyl, Halobenzyl, Phenyl, Halophenyl, Alkoxyphenyl oder Alkylphenyl; oder ein heterocyclischer Rest ist; R¹⁷ und R¹⁸ können gleich oder verschieden sein und Wasserstoff oder Alkyl bedeuten, wobei die Alkylreste durch Cyano, Hydroxy oder C₅-C₆-Cycloalkyl, Aryl oder Heteroaryl, besonders durch Phenyl, mit Halogen, Alkyl oder Alkoxy substituiertes Phenyl, substituiert sein können, oder R¹⁷ und R¹⁸ zusammen mit dem N-Atom einen 5- oder 6-gliedrigen heterocyclischen Ring, z.B. Morpholin, Piperidin oder Phthalimid, bilden. Weitere mögliche Substituenten an den Alkylgruppen sind mono- oder dialkylierte Aminogruppen, Arylreste, wie Naphthyl, Phenyl, Halogenphenyl, Alkylphenyl oder Alkoxyphenyl, sowie heteroaromatische Reste wie 2-Thienyl, 2-Benzoxazolyl, 2-Benzthiazolyl, 2-Benzimidazolyl, 6-Benzimidazolonyl, 2-, 3- oder 4-Pyridyl, 2-, 4- oder 6-Chinolyl. Dabei hat Alkyl die eingangs von (2) genannten Bedeutungen. Beispiele für unsubstituierte und substituierte Alkylgruppen sind Methyl, Ethyl, n-Propyl, Isopropyl, n-Butyl, sec-Butyl, tert-Butyl, tert-Amyl, n-Pentyl, n-Hexyl, 1,1,3,3-Tetramethylbutyl, n-Heptyl, n-Octyl, Nonyl, Decyl, Undecyl, Dodecyl, Hydroxymethyl, Trifluormethyl, Trifluorethyl, Cyanomethyl, Methoxycarbonylmethyl, Acetoxymethyl und Benzyl.
(3) Die Alkoxygruppe -OR¹⁹, worin R¹⁹ Wasserstoff, Alkyl oder Aryl, wie vorstehend definiert, C₅-C₆-Cycloalkyl, Aralkyl oder ein heterocyclischer Rest ist. Bevorzugte Reste R¹⁹ sind Methyl, Ethyl, n-Propyl, Isopropyl, Trifluorethyl, Phenyl, o-, m- oder p-Chlorphenyl, o-, m- oder p-Methylphenyl, alpha- oder beta-Naphthyl, Cyclohexyl, Benzyl, Thienyl oder Pyranylmethyl.
(4) Die Gruppe -SR₁₉, worin R₁₉ die unter (3) angegebene Bedeutung hat. Als Beispiele für R₁₉ seien genannt: Methyl, Ethyl, n-Propyl, Isopropyl, Phenyl, o-, m- oder p-Chlorphenyl, o-, m- oder p-Methylphenyl, α- oder β-Naphthyl, Cyclohexyl, Benzyl, Thienyl oder Pyranylmethyl.
(5) Die Cyangruppe.
(6) Die Gruppe der Formel -NR₁₇R₁₈, worin R₁₇ und R₁₈ die unter (2) angegebene Bedeutung haben. Als Beispiele seien genannt : Amino, Methylamino, Dimethylamino, Ethylamino, Diethylamino, Isopropylamino, β-Hydroxyethylamino, β-Hydroxypropylamino, N,N-Bis-(β-hydroxyethyl)-amino, N,N-Bis-(β-cyanoethyl)-amino, Cyclohexylamino, Phenylamino, N-Methylphenylamino, Benzylamino, Dibenzylamino, Piperidyl oder Morpholyl.
(7) Die Gruppe der Formel -COOR₁₆, worin R₁₆ die unter (2) angegebene Bedeutung hat. Als Beispiele für R₁₆ seien genannt: Methyl, Ethyl, Isopropyl, tert.-Butyl, n-Butyl, Phenyl, Benzyl oder Furfuryl.
(8) Die Gruppe der Formel -COR₁₉, worin R₁₉ die unter (3) angegebene Bedeutung hat. Als Beispiele seien genannt: Methyl, Ethyl, tert.-Butyl, Phenyl, o-, m- oder p-Chlorphenyl, o-, m- oder p-Methylphenyl oder α- bzw. β-Naphthyl.
(9) Die Gruppe der Formel -NR₂₀COR₁₆, worin R₁₆ die unter (2) angegebene Bedeutung hat, R₂₀ Wasserstoff, Alkyl, Aryl, beispielsweise Naphthyl oder insbesondere unsubstituiertes oder durch Halogen, Alkyl oder -O-Alkyl substituiertes Phenyl, C₅-C₆-Cycloalkyl, Aralkyl oder den Rest -COR₁₆ bedeutet, wobei zwei Reste -COR₁₆ zusammen mit dem N-Atom einen heterocyclischen Ring bilden können. In der Definition von R₂₀ vorkommendes Alkyl kann z.B. eine der unter (2) als bevorzugt angegebene Anzahl C-Atome haben. Als Beispiele seien genannt : Acetylamino, Propionylamino, Butyrylamino, Benzoylamino, p-Chlorbenzoylamino, p-Methylbenzoylamino, N-Methylacetylamino, N-Methylbenzoylamino, N-Succinimido oder N-Phthalimido.
(10) Die Gruppe der Formel -NR₁₉COOR₁₆, worin R₁₆ und R₁₉ die unter (2) oder (3) angegebene Bedeutung haben. Als Beispiele seien die Gruppen -NHCOOCH₃, NHCOOC₂H₅ oder NHCOOC₆H₅ genannt.
(11) Die Gruppe der Formel -NR₁₉CONR₁₇R₁₈, worin R₁₉, R₁₇ und R₁₈ die unter (3) oder (2) angegebene Bedeutung haben. Als Beispiele seien genannt: Ureido, N-Methylureido, N-Phenylureido oder N,N'-2',4'-Dimethylphenylureido.
(12) Die Gruppe der Formel -NHSO₂R₁₆, worin R₁₆ die unter (2) angegebene Bedeutung hat. Als Beispiele seien genannt: Methansulfonylamino, Phenylsulfonylamino, p-Toluylsulfonylamino oder β-Naphthylsulfonylamino.
(13) Die Gruppen der Formel -SO₂R₁₆ oder -SOR₁₆, worin R₁₆ die unter (2) angegebene Bedeutung hat. Als Beispiele seien genannt: Methylsulfonyl, Ethylsulfonyl, Phenylsulfonyl, 2-Naphthylsulfonyl, Phenylsulfoxidyl.
(14) Die Gruppe der Formel -SO₂OR₁₆, worin R₁₆ die unter (2) angegebene Bedeutung hat. Als Beispiele für R₁₆ seien genannt: Methyl, Ethyl, Phenyl, o-, m- oder p-Chlorphenyl, o-, m- oder p-Methylphenyl, α- oder β-Naphthyl.
(15) Die Gruppe der Formel -CONR₁₇R₁₈, worin R₁₇ und R₁₈ die unter (2) angegebene Bedeutung haben. Als Beispiele seien genannt: Carbamoyl, N-Methylcarbamoyl, N-Ethylcarbamoyl, N-Phenylcarbamoyl, N,N-Dimethylcarbamoyl, N-Methyl-N-Phenylcarbamoyl, N-α-Naphthylcarbamoyl, oder N-Piperidylcarbamoyl.
(16) Die Gruppe der Formel -SO₂NR₁₇R₁₈, worin R₁₇ und R₁₈ die unter (2) angegebene Bedeutung haben. Als Beispiele seien genannt: Sulfamoyl, N-Methylsulfamoyl, N-Ethylsulfamoyl, N-Phenylsulfamoyl, N-Methyl-N-phenylsulfamoyl oder N-Morpholylsulfamoyl.
(17) Die Gruppe der Formel -N = N-R₂₁, worin R₂₁ den Rest einer Kupplungskomponente oder einen gegebenenfalls durch Halogen, Alkyl oder -O-Alkyl substituierten Phenylrest bedeutet. In den Definitionen von R₂₁ vorkommendes Alkyl kann z.B. eine der unter (2) als bevorzugt angegebene Anzahl C-Atome haben. Als Beispiele für R₂₁ seien genannt : die Aceto-acetarylid-, Pyrazolyl-, Pyridonyl-, o- oder p-Hydroxyphenyl-, o-Hydroxynaphthyl-, p-Aminophenyl- oder p-N,N-Dimethylaminophenylreste.
(18) Die Gruppe der Formel -OCOR₁₆, worin R₁₆ die unter (2) angegebene Bedeutung hat. Als Beispiele für R₁₆ seien genannt : Methyl, Ethyl, Phenyl, o-, m- oder p-Chlorphenyl.
(19) Die Gruppe der Formel -OCONHR₁₆, worin R₁₆ die unter (2) angegebene Bedeutung hat. Als Beispiele für R₁₆ seien genannt: Methyl, Ethyl, Phenyl, o-, m- oder p-Chlorphenyl.

In einer bevorzugten Ausführungsform des erfindungsgemäßen Verfahrens bedeuten die Reste R¹ und R² unabhängig voneinander Phenyl, durch 1 oder 2 Chloratome, 1 oder 2 Methylgruppen, Methoxy, Trifluormethyl, Cyano, Methoxycarbonyl, tert-Butyl, Dimethylamino, oder Cyanophenyl substituiertes Phenyl, Naphthyl, Biphenyl, Pyridyl oder durch Amyloxy substituierte Pyridyl, Furyl oder Thienyl.
Ganz besonders bevorzugt bedeuten die Reste R¹ und R² Phenyl, 3- oder 4-Chlorphenyl, 3,5-Dichlorphenyl, 4-Methylphenyl, 4-Methoxyphenyl, 3-Trifluormethylphenyl, 4-Trifluormethylphenyl, 3-Cyanophenyl, 4-Cyanophenyl, 4-Methoxycarbonylphenyl, 4-Methylphenyl, 4-tert-Butylphenyl, 4-Dimethylaminophenyl, 4-(p-Cyano-phenyl)phenyl, 1- oder 2-Naphthyl, 4-Biphenylyl, 2-Pyridyl, 6-Amyloxy-3-pyridyl, 2-Furyl und 2-Thienyl.

Vorzugsweise verwendet man zur erfindungsgemäßen Herstellung von Verbindungen der Formel I als Ausgangsstoff ein einheitliches Nitril der Formel (II) oder (III). Bevorzugt verwendet man auch Nitrile der Formeln (II) und/oder (III), worin R¹ und R² die vorstehend genannten bevorzugten Bedeutungen haben.

Vor allem verwendet man als Ausgangsstoffe Nitrile der Formel (IV) 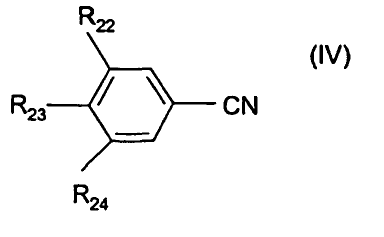 worin R₂₂, R₂₃ und R₂₄ unabhängig voneinander Wasserstoff, Fluor, Chlor, Brom, Carbamoyl, Cyano, Trifluormethyl, C₂-C₁₃-Alkylcarbamoyl, C₁-C₁₂-Alkyl, C₁-C₁₂-Alkoxy, C₁-C₁₂-Alkylmercapto, C₂-C₁₃-Alkoxycarbonyl, C₂-C₁₃-Alkanoylamino, C₁-C₁₂-Monoalkylamino, C₂-C₂₄-Dialkylamino, unsubstituiertes oder durch Halogen, C₁-C₁₂-Alkyl oder C₁-C₁₂-Alkoxy substituiertes Phenyl, Phenylmercapto, Phenoxycarbonyl, Phenylcarbamoyl oder Benzoylamino bedeuten, die Alkyl- und Phenylreste unsubstituiert oder durch Halogen, C₁-C₁₂-Alkyl oder C₁-C₁₂-Alkoxy substituiert sind, wobei mindestens einer der Substituenten R₂₂, R₂₃ und R₂₄ Wasserstoff bedeutet.

Insbesondere verwendet man als Ausgangsstoffe Nitrile der Formel (V) 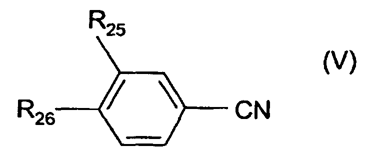 worin einer der Substituenten R₂₅ und R₂₆ Wasserstoff, Chlor, Brom, C₁-C₄-Alkyl, Cyano, C₁-C₄-Alkoxy, unsubstituiertes oder durch Chlor, Methyl oder C₁-C₄-Alkoxy substituiertes Phenyl, Carbamoyl, C₂-C₅-Alkylcarbamoyl, unsubstituiertes oder durch Chlor, Methyl oder C₁-C₄-Alkoxy substituiertes Phenylcarbamoyl bedeutet, und der andere Wasserstoff ist.

Bei den zu verwendenden Bemsteinsäurediestem kann es sich um Dialkyl-, Diaryl- oder Monoalkylmonoarylester handeln, wobei auch die Bernsteinsäuredialkyl- und -diarylester unsymmetrisch sein können. Bevorzugt verwendet man aber symmetrische Bernsteinsäurediester, insbesondere symmetrische Bemsteinsäuredialkylester. Liegt ein Bemsteinsäurediaryl- oder -monoarylmonoalkylester vor, so bedeutet Aryl insbesondere unsubstituiertes oder durch Halogen, wie Chlor, C₁-C₆-Alkyl, wie Methyl, Ethyl, Isopropyl oder tert.-Butyl, oder C₁-C₆-Alkoxy, wie Methoxy oder Ethoxy substituiertes Phenyl.
Handelt es sich um einen Bernsteinsäuredialkyl- oder -monoalkyl-monoarylester so kann Alkyl unverzweigt oder verzweigt sein, bevorzugt verzweigt, und vorzugsweise 1 bis 18, insbesondere 1 bis 12, vor allem 1 bis 8 und besonders bevorzugt 1 bis 5 C-Atomen enthalten. Verzweigtes Alkyl ist bevorzugt sek.- oder tert.-Alkyl, wie z.B. Isopropyl, sek.-Butyl, tert.-Butyl, tert.-Amyl und Cyclohexyl.

Beispiele für Bernsteinsäurediester sind Bernsteinsäure-dimethylester, -diethylester, -dipropylester, -dibutylester, -dipentylester, -dihexylester, -diheptylester, -dioctylester, -diisopropylester, -di-sec.-butylester, -di-tert.-butylester, -di-tert.-amylester, -di-[1,1-dimethylbutyl]-ester, -di-[1,1,3,3-tetramethylbutyl]-ester, -di-[1,1-dimethylpentyl]-ester, -di-[1-methyl-1-ethyl-butyl]-ester, -di-[1,1-diethylpropyl]-ester, -diphenylester, -di-[4-methylphenyl]-ester, -di-[2-methylphenyl]-ester, -di-[4-chlorphenyl]-ester, -monoethylmonophenylester, -dicyclohexylester. Besonders bevorzugt ist der Bernsteinsäurediisopropylester.

Die Bernsteinsäure-diester und die Nitrile der Formel (II) und (III) sind bekannte Verbindungen und können nach bekannten Verfahren hergestellt werden.

Das Verhältnis von eingesetztem Nitril zu Bernsteinsäurediester kann variieren, zweckmäßigerweise von 8 Mol : 1 Mol bis 1 Mol : 2 Mol, bevorzugt von 4 Mol : 1 Mol bis 1 Mol : 1 Mol.
Man führt die Umsetzung des Bernsteinsäurediesters mit dem Nitril in einem organischen Lösemittel durch. Als Lösemittel eignen sich beispielsweise primäre, sekundäre oder tertiäre Alkohole mit 1 bis 10 C-Atomen, wie Methanol, Ethanol, n-Propanol, Isopropanol, n-Butanol, sek.-Butanol, tert.-Butanol, n-Pentanol, 2-Methyl-2-butanol, 2-Methyl-2-pentanol, 3-Methyl-3-pentanol, 2-Methyl-2-hexanol, 3-Ethyl-3-pentanol, 2,4,4-Trimethyl-2-pentanol oder Glykole, wie Ethylenglykol oder Diethylenglykol, oder Ether, wie Tetrahydrofuran oder Dioxan, oder Glykolether, wie Ethylenglykol-methylether, Ethylenglykol-ethylether, Diethylenglykolmonomethylether oder Diethylenglykol-monoethylether, oder dipolar-aprotische Lösungsmittel, wie Acetonitril, Benzonitril, Dimethylformamid, N,N-Dimethylacetamid, Nitrobenzol, N-Methylpyrrolidon; oder aliphatische oder aromatische Kohlenwasserstoffe, wie Benzol oder durch Alkyl, Alkoxy oder Halogen substituiertes Benzol, wie Toluol, Xylol, Anisol oder Chlorbenzol; oder aromatische Heterocyclen, wie Pyridin, Picolin oder Chinolin. Zudem ist es auch möglich, das umzusetzende Nitril der Formel (II) oder (III) oder den umzusetzenden Bernsteinsäurediester gleichzeitig als Lösemittel zu verwenden, falls sie in dem Temperaturbereich flüssig sind, in dem die Umsetzung erfolgt. Die genannten Lösemittel können auch als Mischungen eingesetzt werden. Zweckmäßigerweise verwendet man 1,5 bis 40, bevorzugt 2 bis 20, insbesondere 2 bis 10, Gew.-Teile Lösemittel auf 1 Gew.-Teil der Summe der Umsetzungsteilnehmer (Nitril + Bernsteinsäurediester).

Im erfindungsgemäßen Verfahren verwendet man bevorzugt einen Alkohol als Lösemittel, insbesondere einen sekundären oder tertiären Alkohol. Bevorzugte tertiäre Alkohole sind tert.-Butanol und tert.-Amylalkohol. Dabei sind auch Gemische dieser bevorzugten Lösemittel mit aromatischen Kohlenwasserstoffen, wie Toluol oder Xylol, oder mit durch Halogen substituiertem Benzol, wie Chlorbenzol, von Interesse.

Das erfindungsgemäße Verfahren wird in Gegenwart einer starken Base durchgeführt. Geeignete starke Basen sind insbesondere Alkaliamide, wie Lithium-, Natrium- oder Kaliumamid oder Alkalihydride, wie Lithium-, Natrium- oder Kaliumhydrid, oder Erdalkali- oder Alkalialkoholate, die sich insbesondere von primären, sekundären oder tertiären aliphatischen Alkoholen mit 1 bis 10 C-Atomen ableiten, wie z.B. Lithium-, Natrium- oder Kaliummethylat, -ethylat, -n-propylat, -isopropylat, n-butylat, sek.-butylat, tert.-butylat, -2-methyl-2-butylat, -2-methyl-2-pentylat, -3-methyl-3-pentylat, -3-ethyl-3-pentylat. Man kann aber auch ein Gemisch der genannten Basen verwenden.

Im erfindungsgemäßen Verfahren verwendet man als starke Base bevorzugt Alkalialkoholate, wobei Alkali insbesondere Natrium oder Kalium bedeutet, und das Alkoholat sich bevorzugt von einem sekundären oder tertiären Alkohol ableitet. Besonders bevorzugte starke Basen sind daher z.B. Natrium- oder Kaliumisopropylat, -sek.-butylat, -tert.-butylat und -tert.-amylat.
Zweckmäßigerweise wird die starke Base in einer Menge von 0,1 bis 10 Mol, bevorzugt 1 bis 5 Mol, insbesondere 1,9 bis 4 Mol, pro Mol Bernsteinsäurediester eingesetzt.

Das erfindungsgemäße Verfahren kann vorteilhaft in Gegenwart von Pigmentdispergatoren, vorzugsweise Dispergatoren auf Basis von Diketopyrrolopyrrolen und Chinacridonen, durchgeführt werden. Solche sind z.B. Verbindungen der Formel (IV) 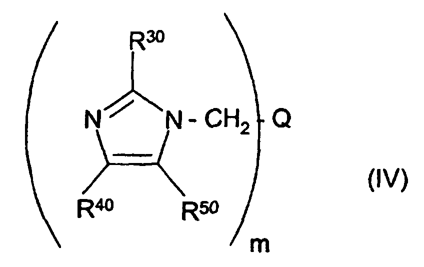 worin
R³⁰, R⁴⁰ und R⁵⁰ gleich oder verschieden sind und Wasserstoff, Chlor, Brom, Fluor, Nitro, C₁-C₆-Alkyl, C₁-C₆-Alkoxy, Benzoylamino, ein isocyclischer oder heterocyclischer aromatischer Rest, insbesondere Wasserstoff oder Methyl, und
Q ein Chinacridon- oder Diketopyrrolopyrrol-Rest, bevorzugt ein unsubstituierter oder mit 1,2,3 oder 4 Substituenten aus der Gruppe F, Cl, Br, C₁-C₄-Alkyl, C₁-C₄-Alkoxy, Carbonamido, welches durch C₁-C₆-Alkylgruppen substituiert sein kann, oder Phenoxy substituierter Chinacridonrest; oder ein unsubstituierter oder ein wie vorstehend beschrieben substituierter Diketopyrrolopyrrolrest, und
m eine Zahl von 0,1 bis 4 bedeuten;

Verbindungen der Formel (V) 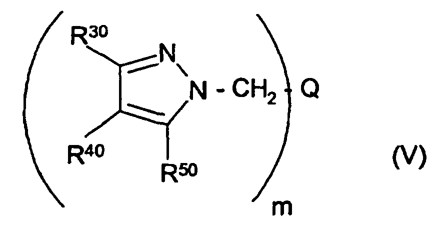 worin R³⁰, R⁴⁰, R⁵⁰, m und Q wie vorstehend definiert sind;

Verbindungen der Formel (VI) 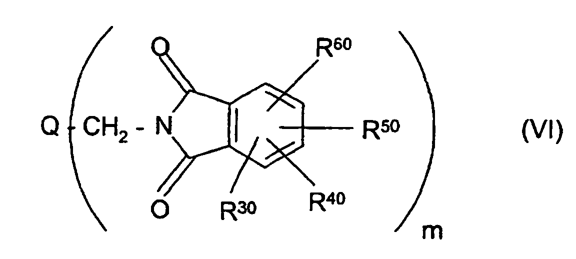 worin
R³⁰, R⁴⁰, R⁵⁰, m und Q wie vorstehend definiert, R⁶⁰ eine der Bedeutungen von R³⁰, R⁴⁰ oder R⁵⁰ hat, vorzugsweise R³⁰ bis R⁶⁰ Wasserstoff, Methyl oder Chlor bedeuten;

Verbindungen der allgemeinen Formel (VII), 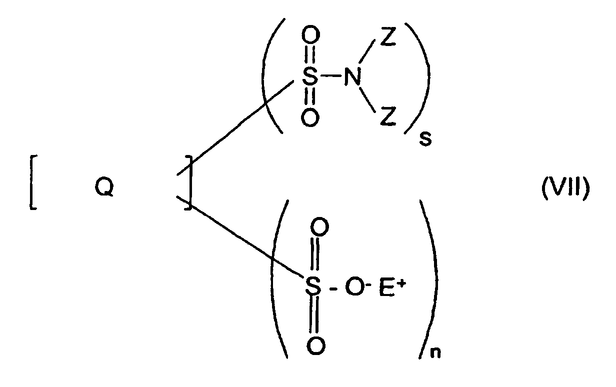 worin Q wie vorstehend definiert ist;
s und n unabhängig voneinander eine Zahl von 0 bis 4 darstellen,
aber nicht gleichzeitig Null sind;
E⁺ H⁺ oder das Äquivalent M^{f+}/f eines Metallkations M^{f+} aus der 1. bis 5. Hauptgruppe oder aus der 1. oder 2. oder der 4. bis 8. Nebengruppe des Periodensystems der chemischen Elemente bezeichnet, wobei f eine der Zahlen 1, 2 oder 3 ist, wie z.B. Li¹⁺, Na¹⁺, K¹⁺, Mg²⁺, Ca²⁺, Sr²⁺, Ba²⁺, Mn²⁺, Cu²⁺, Ni²⁺, Co²⁺, Zn²⁺, Fe²⁺, Al³⁺, Cr³⁺ oder Fe³⁺; ein Ammoniumion N⁺R⁹R¹⁰R¹¹R¹², wobei die Substituenten R⁹, R¹⁰, R¹¹ und R¹² unabhängig voneinander jeweils ein Wasserstoffatom, C₁-C₃₀-Alkyl, C₂-C₃₀-Alkenyl, C₅-C₃₀-Cycloalkyl, Phenyl, (C₁-C₈)-Alkyl-phenyl, (C₁-C₄)-Alkylen-phenyl, beispielsweise Benzyl, oder eine (Poly)alkylenoxy-gruppe der Formel -[CH(R⁸⁰)-CH(R⁸⁰)-O]ₖ-H sind, in der k eine Zahl von 1 bis 30 ist und die beiden Reste R⁸⁰ unabhängig voneinander Wasserstoff, C₁-C₄-Alkyl oder, sofern k > 1 ist, eine Kombination davon bedeuten; und worin als R⁹, R¹⁰, R¹¹, und/oder R¹² ausgewiesenes Alkyl, Alkenyl, Cycloalkyl, Phenyl oder Alkylphenyl durch Amino, Hydroxy, und/oder Carboxy substituiert sein können;
oder wobei die Substituenten R⁹ und R¹⁰ zusammen mit dem quartären N-Atom ein fünf- bis siebengliedriges gesättigtes Ringsystem, das ggf. noch weitere Heteroatome aus der Gruppe O, S und N enthält, bilden können, z.B. vom Pyrrolidon-, Imidazolidin-, Hexamethylenimin-, Piperidin-, Piperazin- oder Morpholin-Typ;
oder wobei die Substituenten R⁹, R¹⁰, und R¹¹ zusammen mit dem quartären
N-Atom ein fünf- bis siebengliedriges aromatisches Ringsystem, das ggf. noch weitere Heteroatome aus der Gruppe O, S und N enthält und an dem ggf. zusätzliche Ringe ankondensiert sind, bilden können, z.B. vom Pyrrol-, Imidazol-, Pyridin-, Picolin-, Pyrazin-, Chinolin- oder Isochinolin-Typ;
oder worin E⁺ ein Ammoniumion der Formel (Vllc) definiert, 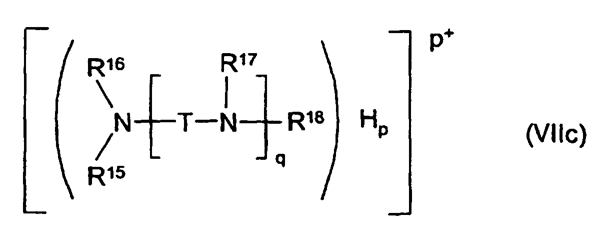 worin
- R¹⁵, R¹⁶, R¹⁷ und R¹⁸: unabhängig voneinander Wasserstoff oder eine (Poly)alkylenoxygruppe der Formel -[CH(R⁸⁰)-CH(R⁸⁰)O]ₖ-H bedeuten, in der k eine Zahl von 1 bis 30 ist und die beiden Reste R⁸⁰ unabhängig voneinander Wasserstoff, C₁-C₄-Alkyl oder, sofern k > 1 ist, eine Kombination davon bedeuten;
- q: eine Zahl von 1 bis 10, vorzugsweise 1, 2, 3, 4 oder 5 ist;
- p: eine Zahl von 1 bis 5, wobei p ≤q+1 ist;
- T: einen verzweigten oder unverzweigten C₂-C₆-Alkylenrest bedeutet; oder worin T, wenn q > 1 ist, auch eine Kombination von verzweigten oder unverzweigten C₂-C₆-Alkylenresten sein kann;
und worin die beiden Reste Z gleich oder verschieden sind und Z die Bedeutung Z¹ oder Z⁴ hat, worin
- Z¹: ein Rest der Formel (Vllb) ist,

-[X-Y]_{q}R⁹¹ (VIIb)

worin
- X: einen C₂-C₆-Alkylenrest, einen C₅-C₇-Cycloalkylenrest, oder eine Kombination dieser Reste ist, wobei diese Reste durch 1 bis 4 C₁-C₄-Alkylreste, Hydroxyreste, (C₁-C₄)-Hydroxyalkylreste und/oder durch 1 bis 2 weitere C₅-C₇-Cycloalkylreste substituiert sein können, oder worin X, wenn q > 1 ist, auch eine Kombination der genannten Bedeutungen sein kann;
- Y: eine -O-, 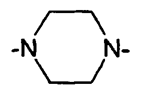 oder -NR⁹⁰-Gruppe, oder worin Y, wenn q > 1 ist, auch eine Kombination der genannten Bedeutungen sein kann;
- q: eine Zahl von 1 bis 10, vorzugsweise 1, 2, 3, 4 oder 5;
- R⁹⁰ und R⁹¹: unabhängig voneinander ein Wasserstoffatom, eine substituierte oder unsubstituierte, oder teil- oder perfluorierte, verzweigte oder unverzweigte (C₁-C₂₀)-Alkylgruppe, eine substituierte oder unsubstituierte C₅-C₇-Cycloalkylgruppe oder eine substituierte oder unsubstituierte, oder teil- oder perfluorierte (C₂-C₂₀)-Alkenylgruppe darstellen, wobei die Substituenten Hydroxy, Phenyl, Cyano, Chlor, Brom, Amino, C₂-C₄-Acyl oder C₁-C₄-Alkoxy sein und vorzugsweise 1 bis 4 an der Zahl sein können, oder
- R⁹⁰ und R⁹¹: zusammen mit dem N-Atom einen gesättigten, ungesättigten oder aromatischen heterocyclischen 5- bis 7-gliedrigen Ring bilden, der gegebenenfalls 1 oder 2 weitere Stickstoff-, Sauerstoff- oder Schwefelatome oder Carbonylgruppen im Ring enthält, gegebenenfalls durch 1, 2 oder 3 der Reste OH, Phenyl, CN, Cl, Br, C₁-C₄-Alkyl, C₁-C₄-Alkoxy, C₂-C₄-Acyl und Carbamoyl substituiert ist, und der gegebenenfalls 1 oder 2 benzoannellierte gesättigte, ungesättigte oder aromatische, carbocyclische oder heterocyclische Ringe trägt;
und worin
- Z⁴: Wasserstoff, Hydroxy, Amino, Phenyl, (C₁-C₄)-Alkylen-phenyl, C₅-C₇-Cycloalkyl oder C₁-C₂₀-Alkyl ist, wobei der Phenylring, die (C₁-C₄)-Alkylen-phenyl-Gruppe und die Alkylgruppe durch ein oder mehrere, z.B. 1, 2, 3 oder 4, Substituenten aus der Gruppe Cl, Br, CN, NH₂, OH, C₆H₅, mit 1, 2 oder 3 C₁-C₄-Alkoxyresten substituiertes C₆H₅, Carbamoyl, C₂-C₄-Acyl und C₁-C₄-Alkoxy, z.B. Methoxy oder Ethoxy, substituiert sein können, der Phenylring und die (C₁-C₄)Alkylenphenyl-Gruppe auch durch NR⁹⁰R⁹¹ substituiert sein können, wobei R⁹⁰ und R⁹¹ die oben genannte Bedeutung haben, oder die Alkylgruppe perfluoriert oder teilfluoriert ist;

Verbindungen der Formel (IX) 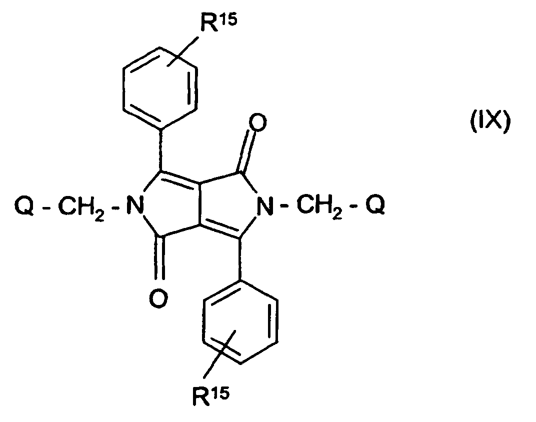 worin R¹⁵ Wasserstoff, Chlor, Brom, Fluor, C₁-C₆-Alkyl, C₁-C₆-Alkoxy, Phenyl, Di-(C₁-C₆-alkyl)amino, C₁-C₆-Alkylthio, Phenylthio oder Phenoxy ist, bevorzugt ist R¹⁵ an 4-Position am Phenylring gebunden,
Q ist wie vorstehend definiert, und wobei die Verbindung der Formel (IX) Null bis 6 SO₃⁻E⁺-Gruppen trägt, wobei E wie vorstehend definiert ist;

Verbindungen der Formel (X) 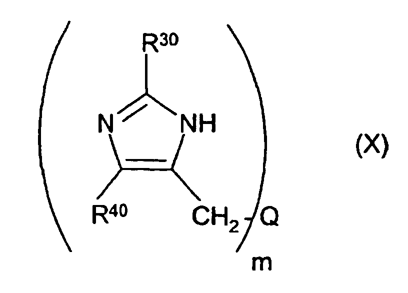 worin R³⁰, R⁴⁰, m und Q wie vorstehend definiert sind.

Weiterhin können die in der EP-A- 0 538 784 beschriebenen saccharinhaltigen Pigmentdispergatoren, vorzugsweise auf Basis von Chinacridonen und Diketopyrrolopyrrolen, in dem erfindungsgemäßen Verfahren eingesetzt werden.

Die beschriebenen Pigmentdispergatoren werden zweckmäßigerweise in der Summe von 0 bis 40 Gew.-%, bevorzugt 0,1 bis 35 Gew.-%, insbesondere 0,5 bis 20 Gew.-%, besonders bevorzugt 1 bis 15 Gew.-%, bezogen auf die Pigmentausbeute bei 100 % Umsatz des im Unterschuß eingesetzten Umsetzungspartners (Bernsteinsäurediester oder Nitril), eingesetzt.

In dem erfindungsgemäßen Verfahren können auch Hilfsmittel aus der Gruppe der Tenside, Füllstoffe, Stellmittel, Harze, Entschäumer, Antistaubmittel, Extender, Farbmittel zum Nuancieren, Konservierungsmittel, Trocknungsverzögerungsmittel, Additive zur Steuerung der Rheologie oder eine Kombination davon eingesetzt werden.

Als Tenside kommen anionische oder anionaktive, kationische oder kationaktive und nichtionische Substanzen oder Mischungen dieser Mittel in Betracht.

Als anionaktive Substanzen kommen beispielsweise Fettsäuretauride, Fettsäure-N-methyltauride, Fettsäureisäthionate, Alkylphenylsulfonate, Alkylnaphthalinsulfonate, Alkylphenolpolyglykolethersulfate, Fettalkoholpolyglykolethersulfate, Fettsäureamidpolyglykolethersulfate, Alkylsulfosuccinamate, Alkenylbernsteinsäurehalbester, Fettalkoholpolyglykolethersulfosuccinate, Alkansulfonate, Fettsäureglutamate, Alkylsulfosuccinate, Fettsäuresarkoside; Fettsäuren, z.B. Palmitin-, Stearin- und Ölsäure; Seifen, z.B. Alkalisalze von Fettsäuren, Naphthensäuren und Harzsäuren, z.B. Abietinsäure, alkalilösliche Harze, z.B. kolophoniummodifizierte Maleinatharze und Kondensationsprodukte auf Basis von Cyanurchlorid, Taurin, N,N'-Diethylaminopropylamin und p-Phenylendiamin in Betracht. Besonders bevorzugt sind Harzseifen, d.h. Alkalisalze von Harzsäuren.

Als kationaktive Substanzen kommen beispielsweise quaternäre Ammoniumsalze, Fettaminoxalkylate, oxalkylierte Polyamine, Fettaminopolyglykolether, Fettamine, von Fettaminen oder Fettalkoholen abgeleitete Di- und Polyamine und deren Oxalkylate, von Fettsäuren abgeleitete Imidazoline, und Salze dieser kationenaktiven Substanzen in Betracht.

Als nichtionogene Substanzen kommen beispielsweise Aminoxide, Fettalkoholpolyglykolether, Fettsäurepolyglykolester, Betaine, wie Fettsäureamid-N-propyl-betaine, Phosphorsäurester von Fettalkoholen oder Fettalkoholpolyglykolethern, Fettsäureamidethoxylate, Fettalkohol-alkylenoxid-Addukte und Alkylphenolpolyglykolether in Betracht.

Die Gesamtmenge der zugegebenen Hilfsmittel und Pigmentdispergatoren kann 0 bis 40 Gew.-%, bevorzugt 0,5 bis 20 Gew.-%, besonders bevorzugt 1 bis 15 Gew.-%, bezogen auf die Pigmentausbeute bei 100 % Umsatz des im Unterschuß eingesetzten Umsetzungspartners (Bernsteinsäurediester oder Nitril), betragen.

Im folgenden werden Nitril, Ester, Lösemittel, Base, Pigmentdispergator und Hilfsmittel zusammenfassend Einsatzstoffe genannt.

Zur erfindungsgemäßen Durchführung der Umsetzung werden die Einsatzstoffe einzeln oder als Mischungen in einen Mikroreaktor eingeleitet. Prinzipiell sind alle denkbaren Kombinationen der Einsatzstoffe möglich; dabei müssen die Materialströme in Summe alle zu verwendenden Einsatzstoffe beinhalten und technisch handhabbar sein.

In einer bevorzugten Ausführungsform der vorliegenden Erfindung werden zwei Materialströme A und B kontinuierlich in den Mikroreaktor eingeleitet und dort miteinander kontinuierlich vermischt, so dass die Umsetzung stattfindet. Bevorzugte Kombinationen sind:

| Komb. | Materialstrom A | Materialstrom B |
|---|---|---|
| 1. | Bernsteinsäureester | Nitril und Alkoholat in Lösemittel |
| 2. | Bernsteinsäureester in Lösemittel | Nitril und Alkoholat in Lösemittel |
| 3. | Bernsteinsäureester und Nitril | Alkoholat in Lösemittel |
| 4. | Bernsteinsäureester und Nitril in Lösemittel | Alkoholat in Lösemittel |
| 5. | Bernsteinsäurediester und Nitril | Alkoholat |
| 6. | Bernsteinsäurediester und Nitril in Lösemittel | Alkoholat |

Sowohl in Materialstrom A als auch in Materialstrom B können vorstehend beschriebene Pigmentdispergatoren, Hilfsmittel und/oder Gemische von Lösemitteln enthalten sein.

Die Herstellung von Mischungen von Einsatzstoffen zu Materialströmen kann auch vorher in Mikromischem oder in vorgeschalteten Vermischungszonen stattfinden. Es können auch Einsatzstoffe in nachgeschalteten Vermischungszonen oder in nachgeschalteten Mikromischem oder -reaktoren zudosiert werden.

Die Umsetzung wird bei Drücken zwischen Normaldruck und 100 bar Überdruck, bevorzugt zwischen Normaldruck und 25 bar, durchgeführt. Die Temperatur kann in weiten Bereichen liegen, bevorzugt zwischen 40 und 200°C, insbesondere zwischen 50 und 160°C, vor allem zwischen 80 und 130°C. Die Materialströme können auch mit unterschiedlicher Temperatur dem Mikroreaktor zugeführt werden.

Zur erfindungsgemäßen Durchführung der Hydrolyse werden eine aus der Umsetzung des Nitrils und des Bernsteinsäureesters entstandene Reaktionssuspension und ein Hydrolysemittel kontinuierlich in einen Mikroreaktor eingeleitet und dort miteinander kontinuierlich vermischt, so dass die Hydrolyse stattfindet. Die Hydrolyse kann auch direkt anschließend an die im Mikroreaktor durchgeführte Umsetzung von Nitril und Bernsteinsäureester in einem nachgeschalteten zweiten Mikroreaktor stattfinden, oder durch Zudosieren eines Hydrolysemittels zum Strom der Reaktionssuspension in einer nachgeschalteten Vermischungszone.

Als Hydrolysemittel werden zweckmäßigerweise Wasser, Alkohole und/oder Säuren und Gemische daraus, und gegebenenfalls weitere Lösemittel, wie vorstehend beschrieben, verwendet.
Als Alkohole kommen beispielsweise C₁-C₆-Alkohole wie Methanol, Ethanol, Isopropanol, Iso-Butanol, tert.-Butanol, tert.-Amylalkohol in Frage.
Bei den Säuren handelt es sich beispielsweise um anorganische Säuren, wie z.B. Salzsäure, Phosphorsäure, und bevorzugt Schwefelsäure, oder um aliphatische oder aromatische Carbon- oder Sulfonsäuren, wie z.B. Ameisensäure, Essigsäure, Propionsäure, Buttersäure, Hexansäure, Oxalsäure, Benzoesäure, Phenylessigsäure, Benzolsulfonsäure oder p-Toluolsulfonsäure, bevorzugt Essigsäure und Ameisensäure, oder um Gemische von Säuren.

Zweckmäßigerweise werden in der Summe 2,5 Gew.-% bis 20 Gew.-%, bevorzugt 4 bis 15 Gew.-%, Wasser, Alkohol und/oder Lösemittel bezogen auf 1 Gew.-Teil Pigmentsalz zur Hydrolyse eingesetzt; bei Verwendung von Säure werden zweckmäßigerweise 0,1 bis 4, bevorzugt 0,5 bis 3, insbesondere 0,5 bis 2 Äquivalente, bezogen auf Base, eingesetzt.

Die Temperaturen bei der Hydrolyse können in weiten Bereichen schwanken, zweckmäßigerweise zwischen -25 und 200°C. Bei tieferen Temperaturen (erfahrungsgemäß unter 80°C) können eher transparente Pigmente, bei höheren Temperaturen (erfahrungsgemäß über 80°C) eher deckende Pigmente erhalten werden. Dabei können die Temperatur des Hydrolysemittels und der Reaktionssuspension auch unterschiedlich sein.

Auch sequentielle Hydrolysen durch mehrfaches partielles Zudosieren eines oder mehrerer Hydrolysemittel sind möglich.

Auch bei der Hydrolyse ist es möglich, Pigmentdispergatoren, Hilfsmittel und/oder Lösemittel vor, während oder nach der Hydrolyse im Mikroreaktor konventionell oder in Vermischungszonen oder in Mikroreaktoren zuzudosieren.

Wird die Hydrolyse nicht in einem Mikroreaktor durchgeführt, erfolgt sie durch Vereinigen der Reaktionssuspension aus der Umsetzung von Nitril und Bernsteinsäureester mit dem Hydrolysemittel nach konventionellen Verfahren.

Je nach Verwendungszweck kann es auch vorteilhaft sein, Gemische von Verbindungen der Formel (I) herzustellen. Dies lässt sich beispielsweise auch dadurch erreichen, indem man unabhängig voneinander hergestellte, verschiedene Reaktionslösungen vor der Hydrolyse mischt oder gleichzeitig hydrolysiert; dies kann konventionell oder auch in einem Mikromischer geschehen.

Die Hydrolysesuspensionen werden nach bekannten Verfahren aufgearbeitet und das Pigment isoliert. Lösemittel können recyclisiert werden. Es ist auch möglich, das Pigment in der Hydrolysesuspension oder nach Zwischenisolierung einer üblichen Nachbehandlung (Finish) mit Wasser und/oder einem Lösemittel zu unterwerfen, beispielsweise bei Temperaturen von 20 bis 180°C.

Die Pigmentdispergatoren, Hilfsmittel und/oder Lösemittel können auch vor, während oder nach einer konventionellen Hydrolyse oder Nachbehandlung zugegeben werden.

Ein Mikroreaktor ist aus mehreren aufeinandergestapelten und miteinander verbundenen Plättchen aufgebaut, auf deren Oberflächen sich mikromechanisch erzeugte Strukturen befinden, die in ihrem Zusammenwirken Reaktionsräume bilden, um chemische Reaktionen auszuführen. Es ist wenigstens ein durch das System hindurchführender Kanal enthalten, der mit dem Einlass und dem Auslass verbunden ist.
Die Flussraten der Materialströme sind apparativ limitiert, beispielsweise durch die sich je nach geometrischer Auslegung des Mikroreaktors einstellenden Drücke. Es ist wünschenswert, dass die Reaktion im Mikroreaktor vollständig abläuft, es kann sich aber auch eine Verweilzone anschließen, um eine gegebenenfalls erforderliche Verweilzeit zu schaffen.

Die Flussraten sind zweckmäßigerweise zwischen 0,05 ml/min und 5 I/min, bevorzugt zwischen 0,05 ml/min und 500 ml/min, besonders bevorzugt zwischen 0,05 ml/min und 250 ml/min, und insbesondere zwischen 0,1 ml/min und 100 ml/min.

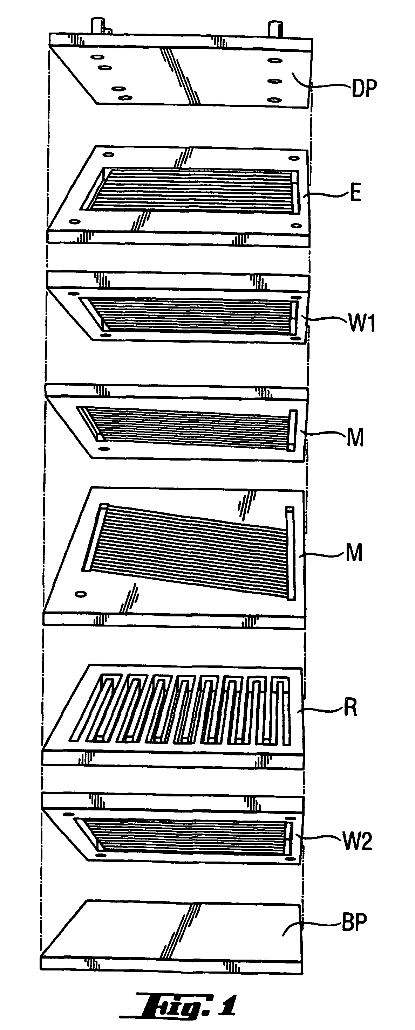

Beispielhaft wird in Figur 1 ein für die Teilschritte der Herstellung von Diketopyrrolopyrrol-Pigmenten einsetzbarer Mikroreaktor beschrieben.
Das vorliegende Mikroreaktionssystem ist in diesem Fall ein aus sechs, aufeinander gestapelten und miteinander verbundenen mikrostrukturierten Blechlagen und je einer Deckelplatte (DP) und Bodenplatte (BP) aufgebautes verfahrenstechnisches Modul, das durch den Zusammenbau unter Druck gehalten oder fest verbunden wird, um Abdichtflächen zwischen den Platten zusammenzupressen.
Das vorliegende Mikroreaktionssystem beinhaltet zwei Wärmetauscher für Kühl- und/oder Heizmedium, eine Mischzone für die Vermischung der Reaktanden sowie eine kurze Verweilstrecke.
Mit Hilfe des Wärmetauschers (W1) werden die in Platte (E) getrennt einströmenden Materialströme vortemperiert. In den Platten (M), die ein gemeinsames Volumen bilden, findet dann die Vermischung der Materialströme statt. In der Verweilzone (R) wird das Reaktionsgemisch mit Hilfe des Wärmetauschers (W2) auf die vorstehend genannten Reaktionstemperaturen gebracht, so dass die jeweilige Reaktion stattfinden kann.

Das Mikroreaktionssystem wird vorzugsweise kontinuierlich betrieben, wobei sich die jeweils miteinander zur Vermischung gebrachten Materialmengen im Mikro- (µl) bis Milliliter (ml) -Bereich bewegen.

Entscheidend für die Herstellungsschritte bei Diketopyrrolopyrrol-Pigmenten in diesem Mikroreaktionssystem sind die Dimensionen der mikrostrukturierten Bereiche innerhalb eines Reaktors. Diese müssen so dimensioniert sein, dass insbesondere Feststoffteilchen problemlos passieren können und so keine Verstopfung der Kanäle auftritt. Die kleinste lichte Weite der Mikrostrukturen ist vorteilhafterweise ca. zehnmal größer als der Durchmesser der größten Teilchen. Weiterhin wird durch entsprechende geometrische Gestaltung dafür gesorgt, dass keine Totwasserzonen, wie z.B. Sackgassen oder scharfe Ecken, in denen z.B. Teilchen sedimentieren können, vorhanden sind. Bevorzugt sind daher kontinuierliche Bahnen mit runden Ecken. Die Strukturen müssen klein genug sein, um die immanenten Vorteile der Mikroreaktionstechnik auszunutzen, nämlich hervorragende Wärmekontrolle, laminare Schichtenströmung, diffusives Mischen und geringes internes Volumen.

Die lichte Weite der lösungs- oder suspensionsführenden Kanäle beträgt zweckmäßigerweise 5 bis 10000 µm, vorzugsweise 5 bis 2000 µm, besonders bevorzugt 10 bis 800 µm, insbesondere 20 bis 700 µm.

Die lichte Weite der Wärmetauscherkanäle richtet sich in erster Linie nach der lichten Weite der flüssigkeits- oder suspensionsführenden Kanäle und ist zweckmäßigerweise kleiner oder gleich 10000 µm, vorzugsweise kleiner oder gleich 2000 µm, insbesondere kleiner oder gleich 800 µm. Die Untergrenze der lichten Weite der Wärmetauscherkanäle ist unkritisch und wird allenfalls durch den Druckanstieg der zu pumpenden Wärmetauscherflüssigkeit und von der Notwendigkeit der optimalen Wärmezufuhr oder -abfuhr begrenzt.

Die Dimensionen eines bevorzugt verwendeten, in Fig.1 beispielhaft dargestellten Mikroreaktionssystems sind:
- Wärmetauscherstrukturen:: Kanalbreite ∼600 µm
Kanalhöhe ∼250 µm
- Mischer :: Kanalbreite ∼600 µm
Kanalhöhe ∼500 µm

Im beispielhaft beschriebenen Mikroreaktor-Typ werden die sechs aufeinanderliegenden und dicht miteinander verbundenen Blechlagen vorzugsweise von oben mit allen Wärmetauscherfluiden und Reaktanden beschickt. Die Abfuhr des Produktes und der Wärmertauscherfluide erfolgt vorzugsweise ebenfalls nach oben. Die eventuelle Zufuhr dritter und vierter an der Reaktion beteiligter Einsatzstoffe (z.B. Wasser oder Lösungsmittel) wird über eine direkt vor oder nach dem Reaktor befindliche T-Verzweigung realisiert. Die Kontrolle der benötigten Konzentrationen und Flüsse wird vorzugsweise über Präzisionskolbenpumpen und einer computergesteuerten Regelung vorgenommen. Die Reaktionstemperatur wird über integrierte Sensoren überwacht und mit Hilfe der Regelung und eines Thermostaten/Cryostaten überwacht und gesteuert.

Das hier dargestellte System ist aus Edelstahl gefertigt; andere Materialien wie zum Beispiel Glas, Keramik, Silizium, Kunststoffe oder andere Metalle sind ebenso einsetzbar.

Es war überraschend und nicht vorhersehbar, dass die Herstellung von Diketopyrrolopyrrol-Pigmenten in dieser technisch eleganten Weise möglich ist, da bei einem Anfall von Feststoff im Mikroreaktor bislang davon ausgegangen wurde, dass das System verstopft. Auch war nicht vorhersehbar, dass die Reaktion und Hydrolyse ohne vorherige mechanische Durchmischung durchgeführt werden kann, d.h. dass die im Mikroreaktor stattfindende Durchmischung ausreicht.

Erfindungsgemäß hergestellte Diketopyrrolopyrol-Pigmente eignen sich zum Pigmentieren von hochmolekularen natürlichen oder synthetischen organischen Materialien, wie beispielsweise Celluloseether und -ester, wie Ethylcellulose, Nitrocellulose, Celluloseacetat, Cellulosebutyrat, natürliche Harze oder Kunstharze, wie Polymerisationsharze oder Kondensationsharze, z.B. Aminoplaste, insbesondere Harnstoff- und Melamin-Formaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen.

Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäß erhaltenen Pigmente als Blends oder in Form von Präparationen oder Dispersionen zu benutzen. Bezogen auf das zu pigmentierende, hochmolekulare organische Material setzt man die erfindungsgemäß hergestellten Pigmente in einer Menge von vorzugsweise 0,05 bis 30 Gew.-%, vorzugsweise 0,1 bis 15 Gew.-% ein.

Mit den nach dem erfindungsgemäßen Verfahren hergestellten Pigmenten können die technisch gängigen Einbrennlacke aus der Klasse der Alkyd-Melamin-Harzlacke, Acryl-Melamin-Harzlacke, Polyesterlacke, Highsolidacrylharzlacke, wässrige Lacke auf Polyurethanbasis sowie Zweikomponentenlacke auf Basis polyisocyanatvernetzbarer Acrylharze und insbesondere Automobil-Metallic-Lacke pigmentiert werden.

Die erfindungsgemäß hergestellten Pigmente sind auch geeignet als Farbmittel in elektrophotographischen Tonern und Entwicklern, wie z. B. Ein- oder Zweikomponentenpulvertonem (auch Ein- oder Zweikomponenten-Entwickler genannt), Magnettoner, Flüssigtoner, Polymerisationstoner sowie Spezialtoner. Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein mit diesen Zusätzen modifiziert werden.

Des weiteren sind die erfindungsgemäß hergestellten Pigmente geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.

Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Außerdem sind die erfindungsgemäß hergestellten Pigmente als Farbmittel in Ink-Jet Tinten auf wässriger und nichtwässriger Basis sowie in solchen Tinten, die nach dem hot-melt-Verfahren arbeiten, geeignet.

Darüber hinaus sind die erfindungsgemäß hergestellten Pigmente auch als Farbmittel für Farbfilter, sowohl für die subtraktive als auch für die additive Farberzeugung, geeignet.

Zur Beurteilung der Eigenschaften der nach der Erfindung hergestellten Pigmente auf dem Lacksektor wurden aus der Vielzahl der bekannten Lacke ein aromatenhaltiger Alkydmelaminharzlack (AM) auf Basis eines mittelöligen Alkydharzes und eines butanolveretherten Melaminharzes, ein High-Solid-Acrylharzeinbrennlack auf Basis einer nichtwäßrigen Dispersion (HS) sowie ein wäßriger Lack auf Polyurethanbasis (PUR) ausgewählt.
Die Bestimmung der Farbstärke und des Farbtons erfolgte nach DIN 55986.
Die Rheologie des Mahlguts nach der Dispergierung (mill base-Rheologie) wurde anhand der folgenden fünfstufigen Skala bewertet:
5 dünnflüssig
4 flüssig
3 dickflüssig
2 leicht gestockt
1 gestockt

Nach dem Verdünnen des Mahlguts auf die Pigmentendkonzentration wurde die Viskosität mit dem Viskospatel nach Rossmann, Typ 301 der Firma Erichsen beurteilt.

Glanzmessungen erfolgten an Folienaufgüssen unter einem Winkel von 20° nach DIN 67530 (ASTMD 523) mit dem "multigloss"-Glanzmeßgerät der Firma Byk-Mallinckrodt.

In den nachstehenden Beispielen beziehen sich Prozentangaben auf Gewichtsprozente.

### Beispiel 1:

a) Amylatlösung (Materialstrom A):
   124 g Natrium wurden in 1365 g wasserfreien tert.-Amylalkohol bei 100°C eingetragen. Die Mischung wurde unter intensivem Rühren unter Rückfluss bis zur vollständigen Umsetzung des Natriums gerührt, dann wurde auf 100°C abgekühlt. Die Amylatlösung ist klar und farblos.
b) Materialstrom B:
   300 g p-Chlorbenzonitril und 328,6 g Bernsteinsäurediisopropylester wurden in 800 g wasserfreien tert.-Amylalkohol eingetragen und bei 90°C gelöst. Die Lösung ist schwach gelblich gefärbt und klar.
c) Reaktion im Mikroreaktor:
   Die beiden Materialströme werden über kalibrierte Kolbenpumpen in die jeweiligen Edukteingänge des Mikroreaktors gepumpt, der Materialstrom A mit einer Flussrate von 40 ml/min und der Materialstrom B mit einer Flussrate von 20 ml/min. Die Reaktion zum Diketopyrrolopyrrol-Pigmentsalz findet im Reaktorraum statt. An dem Wärmetauscher-Kreislauf des Mikroreaktors ist ein Thermostat angeschlossen, der eine Reaktionstemperatur von 106°C einstellt. Die aus dem Reaktor austretende Reaktionssuspension wird auf 80°C warmes Wasser gegeben und das Pigmentsalz dadurch hydrolysiert. Die Pigmentsuspension wird abgesaugt, mit Methanol gewaschen, dann mit Wasser neutral gewaschen. Das feuchte C.I. Pigment Red 254 wird bei 80°C getrocknet. Die Lackierung im AM-Lack ist deckend und farbstark.

## Patentansprüche

1. Verfahren zur Herstellung von 1,4-Diketopyrrolo[3,4-c]pyrrol-Pigmenten der Formel (I), 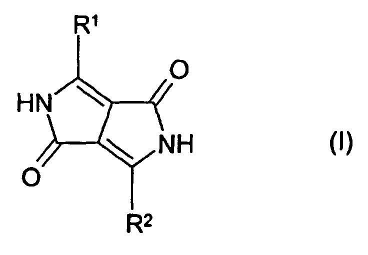 in der R¹ und R² gleich oder verschieden sind und einen unsubstituierten oder substituierten isocyclischen oder heterocyclischen aromatischen Rest darstellen, durch Umsetzung eines Bernsteinsäurediesters mit einem Nitril der Formel (II)
R₁-CN (II)
oder der Formel (III)
R₂-CN (III)
oder mit einer Mischung dieser Nitrile, in einem organischen Lösemittel und in Gegenwart einer starken Base, und anschließender Hydrolyse des entstandenen Salzes des Diketopyrrolopyrrol-Pigmentes, **dadurch gekennzeichnet, dass** man die Umsetzung, oder die Hydrolyse, oder die Umsetzung und die Hydrolyse, in einem Mikroreaktor durchführt.

2. Verfahren nach Anspruch 1, **dadurch gekennzeichnet, dass** R¹ und R² substituierte oder unsubstituierte Reste aus der Gruppe Phenyl, Biphenyl, Naphthyl, Pyridyl, Pyrimidyl, Pyrazinyl, Triazinyl, Furyl, Pyrrolyl, Thiophenyl, Chinolyl, Cumarinyl, Benzfuranyl, Benzimidazolyl, Benzoxazolyl, Dibenzofuranyl, Benzothiophenyl, Dibenzothiophenyl, Indolyl, Carbazolyl, Pyrazolyl, Imidazolyl, Oxazolyl, Isoxazolyl, Thiazolyl, Indazolyl, Benzthiazolyl, Pyridazinyl, Cinnolyl, Chinazolyl, Chinoxalyl, Phthalazinyl, Phthalazindionyl, Phthalamidyl, Chromonyl, Naphtholactamyl, Chinolonyl, ortho-Sulfobenzimidyl, Maleinimidyl, Naphtharidinyl, Benzimidazolonyl, Benzoxazolonyl, Benzthiazolonyl, Benzthiazothionyl, Chinazolonyl, Chinoxalonyl, Phthalazonyl, Dioxopyrimidinyl, Pyridonyl, Isochinolonyl, Isochinolinyl, Isothiazolyl, Benzisoxazolyl, Benzisothiazolyl, Indazolonyl, Acridonyl, Chinazolindionyl, Chinoxalindionyl, Benzoxazindionyl, Benzoxazinonyl und Naphthalimidyl sind.

3. Verfahren nach Anspruch 1 oder 2, **dadurch gekennzeichnet, dass** die Umsetzung und/oder Hydrolyse in Gegenwart eines Pigmentdispergators auf Basis von Diketopyrrolopyrrolen oder Chinacridonen durchgeführt wird.

4. Verfahren nach einem oder mehreren der Ansprüche 1 bis 3, **dadurch gekennzeichnet, dass** der Bernsteinsäurediester, das Nitril der Formel (II) und/oder (III), die starke Base und gegebenenfalls der Pigmentdispergator, in flüssiger, geschmolzener, gelöster oder suspendierter Form in den Mikroreaktor eingeleitet, im Innem des Mikroreaktors kontinuierlich miteinander vermischt und zur Umsetzung gebracht werden.

5. Verfahren nach einem oder mehreren der Ansprüche 1 bis 4, **dadurch gekennzeichnet, dass** man zwei Materialströme A und B in den Mikroreaktor einleitet und kontinuierlich vermischt, wobei Materialstrom A entweder (i) ein flüssiger oder geschmolzener Bernsteinsäuredieester, (ii) ein gelöster Bernsteinsäurediester, (iii) eine flüssige Mischung oder eine Suspension aus Bernsteinsäurediester und dem Nitril der Formel (II) und/oder (III), oder (iv) eine Lösung der Mischung gemäß (iii); und der Materialstrom B im Falle von (i) oder (ii) eine Lösung oder Suspension von Nitril und starker Base, und im Falle von (iii) oder (iv) eine Lösung oder Schmelze der starken Base, darstellen.

6. Verfahren nach einem oder mehreren der Ansprüche 1 bis 5, **dadurch gekennzeichnet, dass** die Umsetzung des Bernsteinsäurediesters mit dem Nitril der Formel (II) und/oder (III) bei einer Temperatur zwischen 40 und 200°C stattfindet.

7. Verfahren nach einem oder mehreren der Ansprüche 1 bis 6, **dadurch gekennzeichnet, dass** eine Suspension des entstandenen Salzes des Diketopyrrolopyrrol-Pigments und ein Hydrolysemittel in gelöster, flüssiger oder suspendierter Form in einen Mikroreaktor eingeleitet, im Innern des Mikroreaktors kontinuierlich miteinander vermischt und zur Umsetzung gebracht werden.

8. Verfahren nach einem oder mehreren der Ansprüche 1 bis 7, **dadurch gekennzeichnet, dass** die Hydrolyse mit Wasser, einem C₁-C₆-Alkohol, einer anorganischen oder organischen Säure, oder einer Mischung davon, durchgeführt wird.

9. Verfahren nach einem oder mehreren der Ansprüche 1 bis 8, **dadurch gekennzeichnet, dass** die Hydrolyse in einem nachgeschalteten Mikroreaktor bei Temperaturen zwischen -25°C und +200°C durchgeführt wird.

10. Verfahren nach einem oder mehreren der Ansprüche 1 bis 9, **dadurch gekennzeichnet, dass** die Umsetzung des Bernsteinsäurediesters mit dem Nitril der Formel (II) und/oder (III) in einem ersten Mikroreaktor, und die Hydrolyse des in diesem ersten Mikroreaktor entstandenen Salzes des Diketopyrrolopyrrol-Pigmentes in einem zweiten, nachgeschalteten Mikroreaktor stattfindet.

11. Verfahren nach einem oder mehreren der Ansprüche 1 bis 10, **dadurch gekennzeichnet, dass** die eingeleiteten Flüssigkeiten oder Suspensionen im Innem des Mikroreaktors mit Hilfe eines oder mehrerer Wärmetauscher auf Reaktionstemperatur gebracht und gehalten werden.

12. Verfahren nach einem oder mehreren der Ansprüche 1 bis 11, **dadurch gekennzeichnet, dass** die Flüssigkeiten oder Suspensionen in einer kontinuierlichen Bahn mit abgerundeten Ecken durch den Mikroreaktor geleitet werden.

13. Verfahren nach einem oder mehreren der Ansprüche 1 bis 12, **dadurch gekennzeichnet, dass** die Konzentrationen, Flussraten und Temperaturen über im Mikroreaktor integrierte Sensoren und Regelkreise erfasst und kontrolliert werden.

## Claims

1. A process for preparing 1,4-diketopyrrolo[3,4-c]pyrrole pigments of the formula (I), 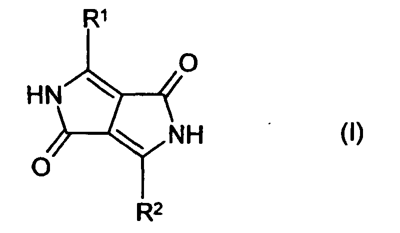 where R¹ and R² are identical or different and are each an unsubstituted or substituted isocyclic or heterocyclic aromatic radical, by reaction of a succinic diester with a nitrile of the formula (II)
R₁-CN (II)
or of the formula (III)
R₂-CN (III)
or with a mixture of these nitriles, in an organic solvent and in the presence of a strong base, and subsequent hydrolysis of the resultant salt of the diketopyrrolopyrrole pigment, which comprises conducting the reaction, or the hydrolysis, or the reaction and the hydrolysis, in a microreactor.

2. The process of claim 1, wherein R¹ and R² are substituted or unsubstituted radicals selected from the group consisting of phenyl, biphenyl, naphthyl, pyridyl, pyrimidyl, pyrazinyl, triazinyl, furyl, pyrrolyl, thiophenyl, quinolyl, coumarinyl, benzofuranyl, benzimidazolyl, benzoxazolyl, dibenzofuranyl, benzothiophenyl, dibenzothiophenyl, indolyl, carbazolyl, pyrazolyl, imidazolyl, oxazolyl, isoxazolyl, thiazolyl, indazolyl, benzothiazolyl, pyridazinyl, cinnolyl, quinazolyl, quinoxalyl, phthalazinyl, phthalazinedionyl, phthalamidyl, chromonyl, naphtholactamyl, quinolonyl, ortho-sulfobenzimidyl, maleimidyl, naphtharidinyl, benzimidazolonyl, benzoxazolonyl, benzothiazolonyl, benzothiazothionyl, quinazolonyl, quinoxalonyl, phthalazonyl, dioxopyrimidinyl, pyridonyl, isoquinolonyl, isoquinolinyl, isothiazolyl, benzisoxazolyl, benzisothiazolyl, indazolonyl, acridonyl, quinazolinedionyl, quinoxalinedionyl, benzoxazinedionyl, benzoxazinonyl and naphthalimidyl.

3. The process as claimed in claim 1 or 2, wherein the reaction and/or hydrolysis is conducted in the presence of a pigment dispersant based on diketopyrrolopyrroles or quinacridones.

4. The process of one or more of claims 1 to 3, wherein the succinic diester, the nitrile of the formula (II) and/or (III), the strong base and optionally the pigment dispersant are introduced into the microreactor in liquid, molten, dissolved or suspended form and continuously mixed and reacted with each other in the microreactor.

5. The process of one or more of claims 1 to 4, wherein two streams A and B are introduced into the microreactor and continuously mixed, stream A being either (i) a liquid or molten succinic diester, (ii) a dissolved succinic diester, (iii) a liquid mixture or a suspension of succinic diester and the nitrile of the formula (II) and/or (III), or (iv) a solution of the mixture as per (iii); and stream B being in the case of (i) or (ii) a solution or suspension of nitrile and strong base and in the case of (iii) or (iv) a solution or melt of the strong base.

6. The process of one or more of claims 1 to 5, wherein the reaction of the succinic diester with the nitrile of formula (II) and/or (III) takes place at a temperature between 40 and 200°C.

7. The process of one or more of claims 1 to 6, wherein a suspension of the resultant salt of the diketopyrrolopyrrole pigment and a hydrolyzant are introduced into a microreactor in dissolved, liquid or suspended form and continuously mixed and reacted with each other in the microreactor.

8. The process of one or more of claims 1 to 7, wherein the hydrolysis is conducted using water, a C₁-C₆-alcohol, an inorganic or organic acid or a mixture thereof.

9. The process of one or more of claims 1 to 8, wherein the hydrolysis is conducted in a downstream microreactor at temperatures between -25°C and +200°C.

10. The process of one or more of claims 1 to 9, wherein the reaction of the succinic diester with the nitrile of formula (II) and/or (III) takes place in a first microreactor and the hydrolysis of the diketopyrrolopyrrole pigment salt formed in this first reactor takes place in a second, downstream microreactor.

11. The process of one or more of claims 1 to 10, wherein the introduced liquids or suspensions are brought to and maintained at reaction temperature in the interior of the microreactor by means of one or more heat exchangers.

12. The process of one or more of claims 1 to 11, wherein the liquids or suspensions are passed through the microreactor in a continuous path with rounded corners.

13. The process of one or more of claims 1 to 12, wherein the concentrations, flow rates and temperatures are captured and controlled via sensors and control circuits integrated in the microreactor.

## Revendications

1. Procédé de fabrication de pigments 1,4-dicétopyrrolo[3,4-c]pyrrole de formule (1), 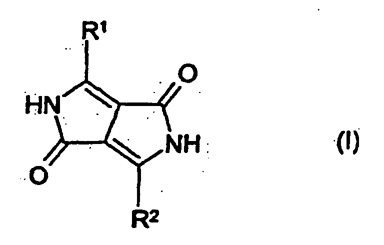 dans laquelle R¹ et R² sont identiques ou différents et représentent un radical aromatique isocyclique ou hétérocyclique, non substitué ou substitué, par réaction d'un diester de l'acide succinique avec un nitrile de formule (II)
R₁-CN (II)
ou de formule (III)
R₂-CN (III)
ou avec un mélange de ces nitriles, dans un solvant organique et en présence d'une base forte, et ensuite hydrolyse du sel obtenu du pigment de dicétopyrrolopyrrole, **caractérisé en ce que** l'on effectue la réaction, ou l'hydrolyse, ou la réaction et l'hydrolyse, dans un microréacteur.

2. Procédé selon la revendication 1, **caractérisé en ce que** R¹ et R² sont des radicaux substitués ou non substitués du groupe phényle, biphényle, naphtyle, pyridyle, pyrimidyle, pyrazinyle, triazinyle, furyle, pyrrolyle, thiophényle, quinoléyle, cumarinyle, benzofuranyle, benzimidazolyle, benzoxazolyle, dibenzofuranyle, benzothiophényle, dibenzothiophényle, indolyle, carbazolyle, pyrazolyle, imidazolyle, oxazolyle, izoxazolyle, thiazolyle, indazolyle, benzothiazolyle, pyridazinyle, cinnolyle, quinazolyle, quinoxalyle, phtalazinyle, phtalazine-dionyle, phtalamidyle, chromonyle, naphtolactamyle, quinolonyle, ortho-sulfobenzimidyle, maléinimidyle, naphtaridinyle, benzimidazolonyle, benzoxazolonyle, benzothiazolonyle; benzothiazothionyle, quinazolonyle, quinoxalonyle, phtalazonyle, dioxopyrimidinyle, pyridonyle, isoquinolonyle, isoquinoléinyle, isothiazolyle, benzisoxazolyle, benzisothiazolyle, indazolonyle, acridonyle, quinazolinedionyle, quinoxalinedionyle, benzoxazinedionyle, benzoxazinonyle et naphtalimidyle.

3. Procédé selon la revendication 1 ou 2, **caractérisé en ce** l'on effectue la réaction et/ou l'hydrolyse en présence d'un dispersant de pigments à base de dicétopyrrolopyrroles ou de quinacridones.

4. Procédé selon une ou plusieurs des revendications 1 à 3, **caractérisé en ce que** le diester de l'acide succinique, le nitrile de formule (II) et/ou (III), la base forte et éventuellement le dispersant de pigments, sont introduits sous forme liquide, fondue, dissoute ou en suspension dans le microréacteur, sont mélangés ensemble en continu à l'intérieur du microréacteur et sont amenés à réagir.

5. Procédé selon une ou plusieurs des revendications 1 à 4, **caractérisé en ce que** l'on introduit deux courants de matière A et B dans le microréacteur et on les mélange en continu, le courant de matière A représentant soit (i) un diester d'acide succinique liquide ou fondu, (ii) un diester d'acide succinique dissous, (iii) un mélange liquide ou une suspension du diester d'acide succinique et du nitrile de formule (II) et/ou (III), soit (iv) une solution du mélange selon (iii) ; et le courant de matière B représente dans le cas de (i) ou (ii) une solution ou une suspension d'un nitrile et d'une base forte, et dans le cas de (iii) ou (iv) une solution ou une fonte de la base forte.

6. Procédé selon une ou plusieurs des revendications 1 à 5, **caractérisé en ce que** l'on effectue la réaction du diester d'acide succinique avec le nitrile de formule (II) et/ou (III) à une température entre 40 et 200 °C.

7. Procédé selon une ou plusieurs des revendications 1 à 6, **caractérisé en ce que** l'on introduit dans un microréacteur une suspension du sel obtenu du pigment dicétopyrrolopyrrole et un agent d'hydrolyse sous forme dissoute, liquide ou en suspension, on les mélange entre eux en continu à l'intérieur du microréacteur et on les amène à réagir.

8. Procédé selon une ou plusieurs des revendications 1 à 7, **caractérisé en ce que** l'on effectue l'hydrolyse avec de l'eau, un alcool en C₁ à C₆, un acide inorganique ou organique, ou un mélange d'entre eux.

9. Procédé selon une ou plusieurs des revendications 1 à 8, **caractérisé en ce que** l'on effectue l'hydrolyse dans un microréacteur placé en aval à des températures entre -25 °C et + 200 °C.

10. Procédé selon une ou plusieurs des revendications 1 à 9, **caractérisé en ce que** la réaction du diester d'acide succinique avec le nitrile de formule (II) et/ou (III) a lieu dans un premier microréacteur, et l'hydrolyse du sel du pigment de dicétopyrrolopyrrole produit dans ce premier microréacteur a lieu dans un deuxième réacteur placé en aval.

11. Procédé selon une ou plusieurs des revendications 1 à 10, **caractérisé en ce que** les liquides ou les suspensions introduits à l'intérieur du microréacteur sont amenés et maintenus à la température de réaction à l'aide d'un ou de plusieurs échangeurs de chaleur.

12. Procédé selon une ou plusieurs des revendications 1 à 11, **caractérisé en ce que** les liquides ou les suspensions traversent le microréacteur en un trajet continu ayant des angles arrondis.

13. Procédé selon une ou plusieurs des revendications 1 à 12, **caractérisé en ce que** les concentrations, les débits et les températures sont mesurés et régulés au moyen de capteurs et de circuits de régulation intégrés au microréacteur.
